(19) Europäisches Patentamt
European Patent Office
Office européen des brevets

(11) Veröffentlichungsnummer: **0 019 796**
**A1**

(12) **EUROPÄISCHE PATENTANMELDUNG**

(21) Anmeldenummer: **80102660.0**

(22) Anmeldetag: **13.05.80**

(51) Int. Cl.³: **C 07 C 69/712,** C 07 C 67/303, C 07 C 67/10, A 01 N 39/02, C 07 C 121/76, C 07 C 79/35

(30) Priorität: **23.05.79 CH 4838/79**
**25.03.80 CH 2330/80**

(43) Veröffentlichungstag der Anmeldung: **10.12.80**
**Patentblatt 80/25**

(84) Benannte Vertragsstaaten: **AT BE CH DE FR GB IT LI NL SE**

(71) Anmelder: **F. HOFFMANN-LA ROCHE & CO. Aktiengesellschaft, CH-4002 Basel (CH)**

(72) Erfinder: **Suchy, Milos, Dr., Grossplatzstrasse 3, CH-8122 Pfaffhausen (CH)**

(74) Vertreter: **Lederer, Franz, Dr. et al, Patentanwälte Dr. Franz Lederer Reiner F. Meyer Lucile-Grahn-Strasse 22, D-8000 München 80 (DE)**

(54) **Propionsäureester, Herstellung dieser Verbindungen, herbizide Mittel, die diese Verbindungen als Wirkstoffe enthalten, sowie Verwendung solcher Verbindungen und Mittel zur Bekämpfung von Unkraut.**

(57) Die Erfindung betrifft Propionsäureester der allgemeinen Formel

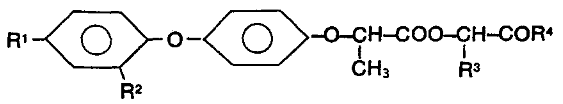
I

worin
$R^1$ Halogen oder Trifluormethyl,
$R^2$ Wasserstoff oder Halogen,
$R^3$ Wasserstoff oder $C_{1-6}$-Alkyl und
$R^4$ Aryl, gegebenenfalls mono-, di- oder trisubstituiert mit Halogen, $C_{1-4}$-Alkyl, $C_{1-4}$-Alkoxy, Hydroxy, Nitro oder Cyan; oder Aryl-$C_{1-3}$-Alkyl, gegebenenfalls im Arylkern mono-, di- oder tri-substituiert mit Halogen, $C_{1-4}$-Alkyl, $C_{1-4}$-Alkoxy, Hydroxy, Nitro oder Cyan, wobei die Substituenten im di- und tri-substituierten Aryl- und Arylalkylrest gleich oder verschieden sein können, bedeuten,
Verfahren zu deren Herstellung, herbizide Mittel, die diese Verbindungen als Wirkstoffe enthalten sowie die Verwendung solcher Verbindungen bzw. Mittel zur Bekämpfung von Unkräutern.

EP 0 019 796 A1

F.Hoffmann-La Roche & Co.Aktiengesellschaft, Basel/Schweiz

0019796
RAN 6102/23

# Propionsäureester, Herstellung dieser Verbindungen, herbicide Mittel, die diese Verbindungen als Wirkstoffe enthalten, sowie Verwendung solcher Verbindungen und Mittel zur Bekämpfung von Unkräutern.

Die Erfindung betrifft Verbindungen der allgemeinen Formel

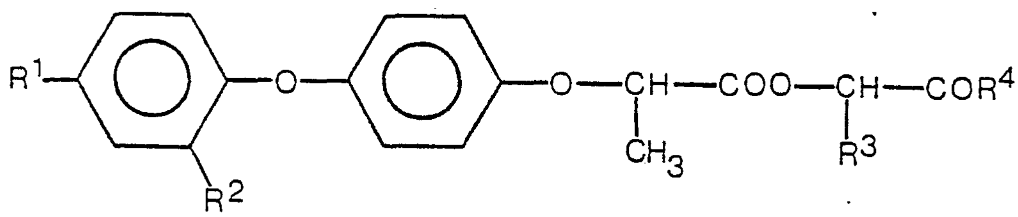 I

worin $R^1$ Halogen oder Trifluormethyl,
$R^2$ Wasserstoff oder Halogen,
$R^3$ Wasserstoff oder $C_{1-6}$-Alkyl
und $R^4$ Aryl, gegebenenfalls mono-, di- oder tri-substituiert mit Halogen, $C_{1-4}$-Alkyl, $C_{1-4}$-Alkoxy, Hydroxy, Nitro oder Cyan; oder Aryl-$C_{1-3}$-Alkyl, gegebenenfalls im Arylkern mono-, di- oder tri-substituiert mit Halogen, $C_{1-4}$-Alkyl, $C_{1-4}$-Alkoxy, Hydroxy, Nitro oder Cyan, wobei die Substituenten im di- und tri-substituierten Aryl- und Arylalkylrest gleich oder verschieden sein können, bedeuten.

Pa/ 18.3. 1980

Wenn $R^1$ oder ein Substituent im Rest $R^4$ Halogen bedeutet, so ist dieses Halogen vorzugsweise ein Chloratom oder Bromatom. $R^2$ in der Bedeutung Halogen ist vorzugsweise ein Chloratom.

Unter dem Ausdruck "Aryl" ist vorzugsweise Phenyl oder Naphthyl zu verstehen.

Die Ausdrücke "Alkyl" und "Alkoxy" umfassen sowohl geradkettige als auch verzweigte Alkyl- bzw. Alkoxyreste. Der $C_{1-3}$-Alkyl-Teil des Aryl-$C_{1-3}$-Alkylrestes kann ebenfalls geradkettig oder verzweigt sein.

Ein bezüglich des Restes $R^1$ besonders bevorzugtes Halogenatom ist das Chloratom. Bedeutet $R^1$ Trifluormethyl bzw. Halogen, insbesondere Chlor, so ist $R^2$ vorzugsweise Wasserstoff bzw. Halogen. Besonders bevorzugt ist der 4-Trifluormethylphenoxyrest, d.h. $R^1$ ist Trifluormethyl und $R^2$ ist Wasserstoff.

Wenn $R^3$ Alkyl bedeutet, so ist dies vorzugsweise Methyl oder Aethyl.

$R^4$ in der Bedeutung gegebenenfalls substituiertes Aryl bedeutet vorzugsweise gegebenenfalls substituiertes Phenyl. Aus der Gruppe der Substituenten für gegebenenfalls substituiertes Aryl und Arylalkyl sind Halogen, Alkyl, Alkoxy und Nitro besonders bevorzugt. Ganz besonders bevorzugte Substituenten sind Chlor, Methoxy und Nitro.

$R^4$ in der Bedeutung gegebenenfalls substituiertes Arylalkyl ist vorzugsweise gegebenenfalls substituiertes Benzyl.

Im allgemeinen bedeutet $R^4$ vorzugsweise gegebenenfalls substituiertes Aryl.

Die obige Formel I umfasst nicht nur racemische Verbindungen, sondern auch optische Isomeren, da mindestens ein asymmetrisches Kohlenstoffatom im Molekül vorhanden ist. Die Formel I soll die Racemate und die einzelnen optischen Isomeren umfassen.

Ganz besonders bevorzugte Verbindungen der Formel I sind:

o-Nitrophenacyl D-2-[p-(α,α,α-trifluor-p-tolyloxy)-phenoxy]propionat,

o-Methoxyphenacyl D-2-[p-(α,α,α-trifluor-p-tolyloxy)-phenoxy]propionat,

m-Nitrophenacyl D-2-[p-(α,α,α-trifluor-p-tolyloxy)-phenoxy]propionat,

p-Nitrophenacyl D-2-[p-(α,α,α-trifluor-p-tolyloxy)-phenoxy]propionat und

p-Chlorphenacyl D-2-[p-(α,α,α-trifluor-p-tolyloxy)-phenoxy]propionat.

Die Erfindung betrifft ferner ein Verfahren zur Herstellung der Verbindungen der Formel I, Verbindungen der Formel I als (Vorauflauf-und Nachauflauf-)herbicide Mittel, (Vorauflauf- und Nachauflauf-)herbicide Mittel, die mindestens eine Verbindung der Formel I als Wirkstoff enthalten sowie die Verwendung solcher herbicider Mittel.

Das erfindungsgemässe Verfahren zur Herstellung der Verbindungen der Formel I ist dadurch gekennzeichnet, dass man

a) eine Säure oder ein reaktionsfähiges Derivat dieser Säure der Formel

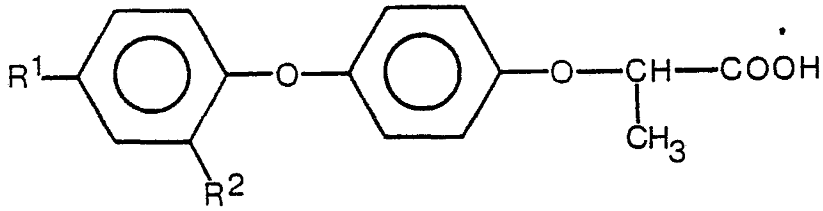 II

worin $R^1$ und $R^2$ die oben angegebenen Bedeutungen besitzen,

mit einem Alkohol oder einem reaktionsfähigen Derivat dieses Alkohols der Formel

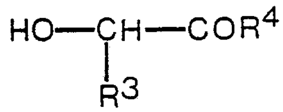 III

worin $R^3$ und $R^4$ die oben angegebenen Bedeutungen besitzen,

umsetzt, oder

b) eine Verbindung der Formel

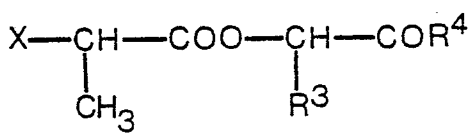 IV

worin $R^3$ und $R^4$ die oben angegebenen Bedeutungen besitzen und X Chlor, Brom, Jod, Mesyloxy oder Tosyloxy bedeutet,

mit einer Verbindung der Formel

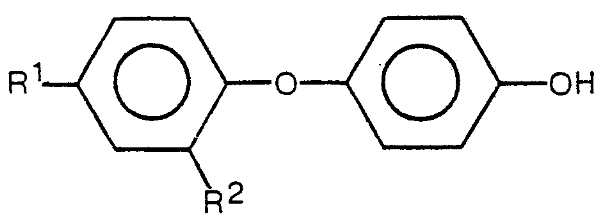 V

worin $R^1$ und $R^2$ die oben angegebenen Bedeutungen besitzen, oder einem Alkalimetallsalz davon, zweckmässigerweise in Gegenwart einer Base, umsetzt, oder

c) eine Verbindung der Formel

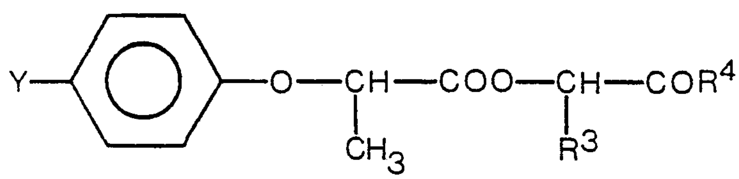

VI

mit einer Verbindung der Formel

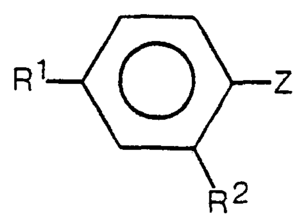

VII

worin $R^1$, $R^2$, $R^3$ und $R^4$ die oben angegebenen Bedeutungen besitzen, und eines von Y und Z Halogen, inbesondere Chlor oder Brom, bedeutet, während das andere Hydroxy bedeutet,
zweckmässigerweise in Gegenwart einer Base, umsetzt.

Unter dem Ausdruck "reaktionsfähiges Derivat" einer Säure der Formel II ist insbesondere ein Säurehalogenid, z.B. das Säurechlorid, das Säureanhydrid oder ein Alkalimetallsalz, z.B. das Natriumsalz, zu verstehen. Unter dem Ausdruck "reaktionsfähiges Derivat" eines Alkohols der Formel III ist insbesondere ein Halogenid, z.B. das Chlorid oder Bromid des Alkohols, zu verstehen. In keinem Fall wird jedoch ein Halogenidderivat des Alkohols mit einem Säurechloridderivat der Säure der Formel II umgesetzt. Die Umsetzung wird vorzugsweise so durchgeführt, dass man eine Säure der Formel II, insbesondere

in der Alkalimetallsalzform, mit einem Halogenid, insbesondere dem Bromid, des Alkohols der Formel III umsetzt.

Die Umsetzungsbedingungen sind aus analogen Reaktionen bekannt. In vielen Fällen ist es zweckmässig, die Umsetzung in Gegenwart eines inerten Lösungsmittels, wie z.B. Aceton, Tetrahydrofuran oder Dimethylformamid, und bei Raumtemperatur oder erhöhter Temperatur, z.B. bis zur Rückflusstemperatur des Reaktionsgemisches, durchzuführen. Bei Verwendung eines Säurehalogenids als reaktionsfähigen Derivats der Säure der Formel II oder eines Halogenids als reaktionsfähigen Derivats des Alkohols der Formel III wird die Umsetzung vorzugsweise in Gegenwart eines Säureacceptors durchgeführt. Als geeignete Säureacceptoren kommen anorganische Basen, z.B. Alkalimetall- und Erdalkalimetallcarbonate und -bicarbonate, sowie organische Basen, z.B. tertiäre Amine, insbesondere Triäthylamin oder Pyridin, in Frage.

Bei der Verfahrensvariante b) wird die Umsetzung zweckmässigerweise in basischem Medium durchgeführt. Es kommen insbesondere anorganische Basen, wie Natrium- und Kaliumhydroxid, Natriumcarbonat, Natriumbicarbonat und Natriumhydrid, in Frage. Organische Basen, wie tertiäre Amine, z.B. Triäthylamin, und Pyridin, können jedoch auch benutzt werden. In vielen Fällen ist es zweckmässig, die Umsetzung in Gegenwart eines inerten Lösungsmittels, wie z.B. Tetrahydrofuran, Dioxan, Dimethylformamid oder Hexamethylphosphorsäuretriamid, durchzuführen. Die zweckmässigen Reaktionstemperturen liegen im allgemeinen zwischen Raumtemperatur und der Rückflusstemperatur des Reaktionsgemisches.

Die Verfahrensvariante c) kann unter den Reaktionsbedingungen der Ullmann-Diaryläthersynthese (siehe z.B. DOS 2 531 643) durchgeführt werden, indem man pulverförmiges Kupfer als Katalysator und einen Säureacceptor,

z.B. Kaliumhydroxid, verwendet. Die Reaktion wird zweckmässigerweise in Gegenwart eines inerten Lösungsmittels, wie z.B. Dimethylsulfoxid, und bei erhöhter Temperatur, z.B. bei der Rückflusstemperatur des Reaktionsgemisches, durchgeführt.

In jedem Fall kann das erhaltene Produkt nach an sich bekannten Methoden isoliert und gereinigt werden.

Erwünschtenfalls können die racemischen Verbindungen unter Verwendung bekannter Verfahren in rechtsdrehende (D-) und linksdrehende (L-) Isomeren getrennt werden, wie z.B. in Industrial and Engineering Chemistry 60(8) 12-28 beschrieben. Die Isomeren können auch durch Synthese aus entsprechenden optisch aktiven Ausgangsmaterialien hergestellt werden.

Die Ausgangsmaterialien der Formeln II bis VII sind zum Teil bekannt und können nach bekannten bzw. analogen Methoden hergestellt werden.

Die erfindungsgemässen Verbindungen der Formel I besitzen herbicide Eigenschaften und eignen sich daher als aktive Bestandteile in (Vorauflauf- und Nachauflauf-) herbiciden Mitteln. Die vorliegende Erfindung betrifft auch solche herbicide Mittel, die als aktiven Bestandteil mindestens eine Verbindung der Formel I enthalten. Zweckmässigerweise enthält ein erfindungsgemässes (Vorauflauf- und Nachauflauf-) herbicides Mittel zumindest eines der folgenden inerten Materialien: festen Trägerstoff, Netzmittel, Verdünnungsmittel und Lösungsmittel.

Die erfindungsgemässen Verbindungen eignen sich besonders zur Bekämpfung von Unkräutern, insbesondere von Ackerfuchsschwanz (Alopecurus myosuroides) und Hirsearten wie beispielsweise Hühnerhirse (Echinochloa crus-galli), grosse Borstenhirse (Setaria faberii) und haarartige Hirse

(Panicum capillare) in Getreide, vorzugsweise Weizen und Reis, sowie in Baumwolle-, Soja-, Zuckerrüben- und Gemüsekulturen.

Zur Verwendung gelangt im allgemeinen eine Konzentration von 0,1 bis 6 kg der Verbindung bzw. Verbindungen der Formel I/ha, vorzugsweise 0,6 bis 2,0 kg/ha. Dies genügt, um den gewünschten herbiciden Effekt zu erzielen. Da die D-Isomeren der Verbindungen der Formel I bedeutend wirksamer zu sein scheinen als die L-Isomeren, sind die entsprechenden Anwendungskonzentrationen für die D-Isomeren etwa die Hälfte der obigen Konzentrationen, die sich auf racemische Mischungen der Verbindungen der Formel I beziehen.

Die Verbindungen der Formel I sind im allgemeinen wasserunlöslich und können nach irgendeiner der für unlösliche Verbindungen üblichen Methoden konfektioniert werden.

Wenn gewünscht, können die Verbindungen der Formel I in einem mit Wasser nicht mischbaren Lösungsmittel, wie beispielsweise einem hochsiedenden Kohlenwasserstoff, gelöst werden, das zweckmässigerweise gelöste Emulgatoren enthält, so dass es bei Zugabe zu Wasser als selbstemulgierbares Oel wirkt.

Die Verbindungen der Formel I können auch mit einem Netzmittel mit oder ohne inertes Verdünnungsmittel zur Bildung eines netzbaren Pulvers vermischt werden, welches in Wasser löslich oder dispergierbar ist, oder sie können mit dem inerten Verdünnungsmittel zur Bildung eines festen oder pulverförmigen Produktes vermischt werden.

Inerte Verdünnungsmittel, mit welchen die Verbindungen der Formel I verarbeitet werden können, sind feste inerte Medien, einschliesslich pulverförmige oder feinverteilte Feststoffe, wie beispielsweise Tone, Sande, Talk, Glimmer und Düngemittel, wobei solche Produkte entweder staubförmig oder als Materialien mit grösserer Teilchengrösse vorliegen können.

Die Netzmittel können anionische Verbindungen, wie beispielsweise Seifen, Fettsulfatester, die Dodecylnatriumsulfat, Octadecylnatriumsulfat und Cetylnatriumsulfat, fettaromatische Sulfonate, wie Alkylbenzolsulfonate oder Butylnaphthalinsulfonate, komplexere Fettsulfonate, wie die Amidkondensationsprodukte von Oelsäure und N-Methyltaurin oder das Natriumsulfonat von Dioctylsuccinat sein.

Die Netzmittel können auch nichtionische Netzmittel, wie beispielsweise Kondensationsprodukte von Fettsäuren, Fettalkoholen oder fettsubstituierten Phenolen mit Aethylenoxyd, oder Fettsäureester und -äther von Zuckern oder mehrwertigen Alkoholen oder die Produkte, die aus letzteren durch Kondensation mit Aethylenoxyd erhalten werden, oder die Produkte, die als Blockcopolymere von Aethylenoxyd und Propylenoxyd bekannt sind, sein. Die Netzmittel können auch kationische Mittel, wie beispielsweise Cetyltrimethylammoniumbromid und dgl., sein.

Die erfindungsgemässen herbiciden Mittel können auch in Form von Aerosolen vorliegen, wobei zweckmässigerweise zusätzlich zum Treibgas, welches geeigneterweise ein polyhalogeniertes Alkan, z.B. Dichlordifluormethan, ist, ein Co-Solvens und ein Netzmittel verwendet wird.

Die erfindungsgemässen herbiciden Mittel können zusätzlich zu den Verbindungen der Formel I Synergisten und andere Wirkstoffe, z.B. Insekticide, Akaricide, Bactericide, anderweitige Herbicide, Fungicide, Pflanzenwachstumsregulatoren, und Düngemittel, enthalten. Solche Kombinationsmittel eignen sich zur Verstärkung der Aktivität bzw. zur Verbreiterung des Wirkungsspektrums. Beispiele solcher bekannter Wirkstoffe (Herbicide) sind die folgenden:

| | |
|---|---|
| naptolam | = 2-[(1-Naphthylamino)carbonyl]benzoesäure |
| dinoseb | = 2-(1-Methylpropyl)-4,6-dinitrophenol |
| 2,4-DB | = 4-(2,4-Dichlorphenoxy)buttersäure |
| linuron | = N'-(3,4-Dichlorphenyl)-N-methoxy-N-methylharnstoff |
| chloroxuron | = N'-[4-(4-Chlorphenoxy)phenyl]-N,N-dimethylharnstoff |
| bifenox | = Methyl-5-(2,4-dichlorphenoxy)-2-nitrobenzoat |
| glyphosate | = N-(Phosphonomethyl)glycin |
| acifluorfen | = Natrium-5-(2-chlor-4-trifluormethylphenoxy)-2-nitrobenzoat |
| dalapon | = 2,2-Dichlorpropancarbonsäure |
| barban | = 4-Chlor-2-butinyl-3-chlorphenylcarbamat |
| bentazone | = 3-(1-Methyläthyl)-(1H)-2,1,3-benzothiadiazinon-2,2-dioxid |
| diquat | = 6,7-Dihydropyrido[1,2-a: 2',1'-c]pyrazidiiniumdibromid, und analoge Salze |
| paraquat | = 1,1'-Dimethyl-4,4'-bipyridiniumdichlorid, und analoge Salze |
| chlorpropham | = 1-Methyläthyl-3-chlorphenylcarbamat |
| MSMA | = Mononatrium-methanarsonat |
| DSMA | = Dinatrium-methanarsonat |
| DCPA | = Dimethyl-2,3,5,6-tetrachlor-1,4-benzoldicarboxylat |
| fluometuron | = N,N-Dimethyl-N'-[3-(trifluormethyl)phenyl]-harnstoff |
| diuron | = N'-(3,4-Dichlorphenyl)-N,N-dimethylharnstoff |
| prometryne | = N,N'-bis[1-Methyläthyl]-6-(methylthio)-1,3,5-triazin-2,4-diamin |
| cyanazine | = 2-[(4-Chlor-6-(äthylamino)-1,3,5-triazin-2-yl)amino]-2-methylpropannitril |
| methazole | = 2-(3,4-Dichlorphenyl)-4-methyl-1,2,4-oxadiazolidin-3,5-dion |

phenisopham = Isopropyl-N-3-(N-äthyl-N-phenylcarbamoyloxy)-phenylcarbamat

phenmedipham = 3-[(Methoxycarbonyl)amino]phenyl·(3-methylphenyl)carbamat

alloxydim = 2-(1-Allyloxyaminobutyliden)-5,5-dimethyl-4-methoxycarbonyl-cyclohexan-1,3-dion

NP 55 = 2-[(1-Aethoxyimino)butyl]-5-[(2-äthylthio)-propyl]-3-hydroxy-2-cyclohexen-1-on

KK 80 = Aethyl-4-[4-(4-(trifluormethyl)phenoxy)-phenoxy]-2-pentenoat

PP 009 = Methyl-2,4-(4-trifluormethylpyridin-2-yloxy)phenoxypropionat

pyrifenop = Natrium-2-[4-(3,5-dichlorpyridin-2-yloxy)-propionat

isouron = 1-(5-tert-Butylisoazol-3-yl)-3,3-dimethylharnstoff

N-[4-(para-Methylphenyläthoxy)phenyl]-N'-methyl-N'-methoxyharnstoff

difenzoquat = 1,2-Dimethyl-3,5-diphenyl-1H-pyrazolium-methylsulfat, und analoge Salze

diclofop = Methyl-2-[4-(2,4-dichlorphenoxy)-phenoxy]-propionat

flamprop = 1-Methyläthyl-DL-N-benzoyl-N-(3-chlor-4-fluorphenyl)alanin

benzoylprop = 1-Aethyl-DL-N-benzoyl-N-(3,4-dichlorphenyl)-alanin

terbutryne = N-(1,1-Dimethyläthyl)-N'-äthyl-6-(methyl-thio)-1,3,5-triazin-2,4-diamin

dicamba = 3,6-Dichlor-2-methoxybenzoesäure

bromoxynil = 3,5-Dibrom-4-hydroxybenzonitril

MCPA = 4-Chlor-2-methylphenoxyessigsäure

MCPP = 4-Chlor-2-methylphenoxypropionsäure

picloram = 4-Amino-3,5,6-trichlorpyridin-2-carbonsäure

propanil = N-(3,4-Dichlorphenyl)-propansäureamid

molinate = S-Aethylhexahydro-1H-azepin-1-carbothioat

bifenox = Methyl 5-(2,4-dichlorphenoxy)-2-nitrobenzoat

thiobencarb = S-[(4-Chlorphenyl)methyl]diäthylcarbamo-thioat

| | |
|---|---|
| oxadiazon | = 3-[2,4-Dichlor-5-(1-methyläthyloxy)-phenyl]-5-(1,1-dimethyläthyl)-1,3,4-oxa-diazol-2(3H)-on |
| butachlor | = N-(Butoxymethyl)-2-chlor-N-(2,6-diäthyl-phenyl)acetamid |
| asulam | = Methyl [(4-aminophenyl)sulfonyl]carbamat |
| propyzamide | = 3,5-Dichlor-N-(1,1-dimethylpropinyl)-benzamid |
| carbetamide | = N-Aethyl-2-[((phenylamino)carbonyl)oxy]-propionsäureamid |
| simazine | = 6-Chlor-N,N'-diäthyl-1,3,5-triazin-2,4-diamin |
| simetryne | = N,N'-Diäthyl-6-(methylthio)-1,3,5-triazin-2,4-diamin |
| bromacil | = 5-Brom-6-methyl-3-(1-methylpropyl)-2,4(1H, 3H)-pyrimidindion |
| dichlobenil | = 2,6-Dichlorbenzonitril |
| ATA | = 1H-1,2,4-Triazol-3-amin |
| chloridazon | = 5-Amino-4-chlor-2-phenyl-3(2H)-pyridazinon |
| lenacil | = 3-Cyclohexyl-6,7-dihydro-1H-cyclopenta-pyrimidin-2,4(3H, 5H)-dion |
| metamitron | = 4-Amino-3-methyl-6-phenyl-1,2,4-triazin-5(4H)-on |
| metribuzin | = 4-Amino-6 -(1,1-dimethyläthyl)-3-(methyl-thio)-1,2,4-triazin-5(4H)-on |
| isoproturon | = N,N-Dimethyl-N'-[4-(1-methyläthyl)phenyl]-harnstoff |
| bromofenoxim | = 3,5-Dibrom-4-hydroxybenzaldehyd-O-(2,4-dinitrophenyl)oxim |
| ethofumesate | = (±)-2-Aethoxy-2,3-dihydro-3,3-dimethyl-benzofuran-5-yl-methansulfonat |
| benazolin | = 4-Chlor-2-oxo-3(2H)-benzothiazolessigsäure |
| dimefuron | = 3-[2-Chlor-4-(3,3-dimethylureido)phenyl]-5-(1,1-dimethyläthyl)-1,3,4-oxadiazolyl-2-(3H)-on |
| flurenol | = 9-Hydroxy-9H-fluoren-9-carbonsäure |

In ihren verschiedenen Anwendungsgebieten können die erfindungsgemässen Verbindungen in unterschiedlichen Mengenverhältnissen eingesetzt werden.

Die erfindungsgemässen herbiciden Mittel können in einer Form vorliegen, die sich für die Lagerung und den Transport eignet. Solche Formen können z.B. 2-90 Gewichtsprozent an einem oder mehreren Wirkstoffen der Formel I enthalten. Diese Formen können dann mit gleichen oder verschiedenen Trägermaterialien bis zu Konzentrationen verdünnt werden, die sich für den praktischen Gebrauch eignen. In gebrauchsfertigen Mitteln, je nach deren Art, können im allgemeinen Wirkstoffkonzentrationen von 0,1-60 Gewichtsprozent vorliegen. Die Wirkstoffkonzentration kann jedoch auch kleiner oder grösser sein und wird in der Regel vom Verbraucher bestimmt.

Die folgenden Beispiele sollen die vorliegende Erfindung illustrieren.

## Beispiel 1

Eine Lösung von 10 g 2-[p-(p-Chlorphenoxy)phenoxy]-propionsäure und 7,2 g Phenacylbromid in 100 ml Aceton wird mit 9,4 g Kaliumcarbonat 6 Stunden unter Rühren zum Sieden erhitzt. Nach dem Abfiltern von anorganischen Salzen wird das Filtrat zur Trockne eingedampft, der gebildete Ester in Methylenchlorid aufgenommen und nach mehrfachem Ausschütteln der Lösung mit Wasser durch Abdampfen des organischen Lösungsmittels isoliert. Es wird durch Kristallisation aus Methanol gereinigt. Man erhält Phenacyl 2-[p-(p-chlorphenoxy)phenoxy]propionat vom Schmelzpunkt 74-75°C.

Nach der im vorstehenden Beispiel angegebenen Vorschrift erhält man aus:

2-[p-(p-Chlorphenoxy)phenoxy]propionsäure und p-Bromphenacylbromid das p-Bromphenacyl 2-[p-(p-chlorphenoxy)-phenoxy]propionat; Fp: 98-100°C.

2-[p-(p-Chlorphenoxy)phenoxy]propionsäure und α-Methylphenacylbromid das α-Methylphenacyl 2-[p-(p-chlorphenoxy)phenoxy]propionat; Fp: 100-103°C.

2-[p-(2,4-Dichlorphenoxy)phenoxy]propionsäure und α-Methylphenacylbromid das α-Methylphenacyl 2-[p-(2,4-dichlorphenoxy)phenoxy]propionat; $n_D^{20}$ 1,5750.

2-[p-(2,4-Dichlorphenoxy)phenoxy]propionsäure und o-Chlorphenacylbromid das o-Chlorphenacyl 2-[p-(2,4-dichlorphenoxy)phenoxy]propionat; $n_D^{20}$ 1,5902.

## Beispiel 2

1,3 g einer 50%igen Suspension von Natriumhydrid in Mineralöl werden in einer Inertgasatmosphäre zweimal

mit je 5,0 ml Tetrahydrofuran gewaschen, dann in 15,0 ml Tetrahydrofuran eingetragen und tropfenweise mit einer Lösung von 10,0 g D-2-[p-(α,α,α-Trifluor-p-tolyloxy)phenoxy]propionsäure in 30,0 ml Dimethylformamid versetzt. In das Gemisch werden anschliessend 7,5 g o-Nitrophenacylbromid in 20,0 ml Dimethylformamid eingetropft. Das Reaktionsgemisch wird 2 Stunden bei Raumtemperatur nachgerührt, auf Eis gegossen und erschöpfend mit Aether extrahiert. Der Aetherextrakt wird mit Wasser gewaschen, über Natriumsulfat getrocknet und unter vermindertem Druck eingedampft. Das zurückbleibende o-Nitrophenacyl D-2-[p-(α,α,α-trifluor-p-tolyloxy)phenoxy]propionat wird durch Adsorption an Kieselgel gereinigt. $[\alpha]_D^{22}$ +35,5° (in $CHCl_3$, c = 2,1%).

Nach der im vorstehenden Beispiel angegebenen Vorschrift erhält man aus:

D-2-[p-(α,α,α-Trifluor-p-tolyloxy)phenoxy]propionsäure und m-Nitrophenacylbromid das m-Nitrophenacyl D-2-[p-(α,α,α-trifluor-p-tolyloxy)phenoxy]propionat; $[\alpha]_D^{22}$ +35,6° (in $CHCl_3$, c = 1,2%).

D-2-[p-(α,α,α-Trifluor-p-tolyloxy)phenoxy]propionsäure und p-Nitrophenacylbromid das p-Nitrophenacyl D-2-[p-(α,α,α-trifluor-p-tolyloxy)phenoxy]propionat; Fp: 103-105°C.

D-2-[p-(α,α,α-Trifluor-p-tolyloxy)phenoxy]propionsäure und o-Methylphenacylbromid das o-Methylphenacyl D-2-[p-(α,α,α-trifluor-p-tolyloxy)phenoxy]propionat; $[\alpha]_D^{22}$ = +33,4° (in $CHCl_3$, c = 0,8%).

D-2-[p-(α,α,α-Trifluor-p-tolyloxy)phenoxy]propionsäure und o-Chlorphenacylbromid das o-Chlorphenacyl D-2-[p-(α,α,α-trifluor-p-tolyloxy)phenoxy]propionat; $[\alpha]_D^{22}$ = +36,0° (in $CHCl_3$, c = 1,6%).

D-2-[p-(α,α,α-Trifluor-p-tolyloxy)phenoxy]propionsäure und 2,4-Dichlorphenacylbromid das 2,4-Dichlorphenacyl D-2-[p-(α,α,α-trifluor-p-tolyloxy)phenoxy]propionat; $[\alpha]_D^{22}$ = +35,9° (in $CHCl_3$, c = 1,4%).

D-2-[p-(α,α,α-Trifluor-p-tolyloxy)phenoxy]propionsäure und Phenacylbromid das Phenacyl D-2-[p-(α,α,α-trifluor-p-tolyloxy)phenoxy]propionat; Fp: 67-69°C.

D-2-[p-(α,α,α-Trifluor-p-tolyloxy)phenoxy]propionsäure und p-Chlorphenacylbromid das p-Chlorphenacyl D-2-[p-(α,α,α-trifluor-p-tolyloxy)phenoxy]propionat; $[\alpha]_D^{22}$ = +36,8° (in $CHCl_3$, c = 1,2%).

D-2-[p-(α,α,α-Trifluor-p-tolyloxy)phenoxy]propionsäure und p-tert.-Butylphenacylbromid das p-tert.-Butylphenacyl D-2-[p-(α,α,α-trifluor-p-tolyloxy)phenoxy]propionat; $[\alpha]_D^{22}$ = +35,7° (in $CHCl_3$, c = 0,8%).

D-2-[p-(α,α,α-Trifluor-p-tolyloxy)phenoxy]propionsäure und p-tert.-Butyl-α-methylphenacylbromid das p-tert.-Butyl-α-methylphenacyl D-2-[p-(α,α,α-trifluor-p-tolyloxy)phenoxy]propionat; $[\alpha]_D^{22}$ = +39,1° (in $CHCl_3$, c = 1,3%).

D-2-[p-(α,α,α-Trifluor-p-tolyloxy)phenoxy]propionsäure und p-Methoxyphenacylbromid das p-Methoxyphenacyl D-2-[p-(α,α,α-trifluor-p-tolyloxy)phenoxy]propionat; $[\alpha]_D^{22}$ = +43,7° (in $CHCl_3$, c = 1,0%).

D-2-[p-(α,α,α-Trifluor-p-tolyloxy)phenoxy]propionsäure und m-Methoxyphenacylbromid das m-Methoxyphenacyl D-2-[p-(α,α,α-trifluor-p-tolyloxy)phenoxy]propionat; $[\alpha]_D^{22}$ = +33,1° (in $CHCl_3$, c = 1,1%).

D-2-[p-(α,α,α-Trifluor-p-tolyloxy)phenoxy]propionsäure und o-Methoxyphenacylbromid das o-Methoxyphenacyl

D-2-[p-(α,α,α-trifluor-p-tolyloxy)phenoxy]propionat; $[\alpha]_D^{22}$ = +43,7° (in $CHCl_3$, c = 1,1%).

D-2-[p-(α,α,α-Trifluor-p-tolyloxy)phenoxy]propionsäure und p-Methylphenacylbromid das p-Methylphenacyl D-2-[p-(α,α,α-trifluor-p-tolyloxy)phenoxy]propionat; $[\alpha]_D^{22}$ = +37,3° (in $CHCl_3$, c = 1,4%).

D-2-[p-(α,α,α-Trifluor-p-tolyloxy)phenoxy]propionsäure und α-Methylphenacylbromid das α-Methylphenacyl D-2-[p-(α,α,α-trifluor-p-tolyloxy)phenoxy]propionat; Fp: 88-91°C.

D-2-[p-(α,α,α-Trifluor-p-tolyloxy)phenoxy]propionsäure und α-Aethylphenacylbromid das α-Aethylphenacyl D-2-[p-(α,α,α-trifluor-p-tolyloxy)phenoxy]propionat; $[\alpha]_D^{22}$ = +37,9° (in $CHCl_3$, c = 0,8%).

D-2-[p-(α,α,α-Trifluor-p-tolyloxy)phenoxy]propionsäure und α-Methyl-p-methoxyphenacylbromid das α-Methyl-p-methoxyphenacyl D-2-[p-(α,α,α-trifluor-p-tolyloxy)phenoxy]propionat; $[\alpha]_D^{22}$ = +48,1° (in $CHCl_3$, c = 0,95%).

D-2-[p-(α,α,α-Trifluor-p-tolyloxy)phenoxy]propionsäure und α-Methyl-2-hydroxy-5-bromphenacylbromid das α-Methyl-2-hydroxy-5-bromphenacyl D-2-[p-(α,α,α-trifluor-p-tolyloxy)phenoxy]propionat; $[\alpha]_D^{22}$ = +41,2° (in $CHCl_3$, c = 1,4%).

D-2-[p-(p-Bromphenoxy)phenoxy]propionsäure und m-Nitrophenacylbromid das m-Nitrophenacyl D-2-[p-(p-bromphenoxy)phenoxy]propionat; $[\alpha]_D^{22}$ = +35,6° (1,0% in $CHCl_3$).

D-2-[p-(α,α,α-Trifluor-p-tolyloxy)phenoxy]propionsäure und α-Brom-2-acetonaphthon das 2-Naphthoylmethyl D-2-[p-(α,α,α-trifluor-p-tolyloxy)phenoxy]propionat; $[\alpha]_D^{22}$ = +42,09° (0,6% in $CHCl_3$).

D-2-[p-(2,4-Dichlorphenoxy)phenoxy]propionsäure und m-Nitrophenacylbromid das m-Nitrophenacyl D-2-[p-(2,4-dichlorphenoxy)phenoxy]propionat; $[\alpha]_D^{22}$ = +34,4° (1,0% in $CHCl_3$).

D-2-[p-(p-Chlorphenoxy)phenoxy]propionsäure und α-Methylphenacylbromid das α-Methylphenacyl D-2-[p-(p-chlorphenoxy)phenoxy]propionat; $[\alpha]_D^{22}$ = +57,9° (1,0% in $CHCl_3$).

D-2-[p-(p-Chlorphenoxy)phenoxy]propionsäure und o-Chlorphenacylbromid das o-Chlorphenacyl D-2-[p-(p-chlorphenoxy)phenoxy]propionat; $[\alpha]_D^{22}$ = +45,07° (1,1% in $CHCl_3$).

D-2-[p-(α,α,α-Trifluor-p-tolyloxy)phenoxy]propionsäure und p-Cyanphenacylbromid das p-Cyanphenacyl D-2-[p-(α,α,α-trifluor-p-tolyloxy)phenoxy]propionat; $n_D^{20}$ 1,5512.

Das Ausgangsmaterial α-Methyl-2-hydroxy-5-bromphenacylbromid kann wie folgt hergestellt werden:

Zu einer Lösung von 20 g 2-Hydroxypropiophenon in 200 ml Dioxan werden tropfenweise 41,6 g Brom zugegeben. Bei Raumtemperatur wird während 12 Stunden nachgerührt. Aus dem Gemisch wird dann das Lösungsmittel entfernt. Das zurückbleibende α-Methyl-2-hydroxy-5-bromphenacylbromid wird durch Kristallisation aus Aethanol gereinigt. Fp: 88-90°C.

## Beispiel 3

0,5 g einer 50%igen Suspension von Natriumhydrid in Mineralöl werden in einer Inertgasatmosphäre zweimal mit je 0,5 ml Tetrahydrofuran gewaschen, dann in 15,0 ml Tetrahydrofuran eingetragen und tropfenweise mit einer Lösung von 2,0 g p-(p-Chlorphenoxy)phenol in 8,0 ml Tetrahydrofuran versetzt. In das Gemisch werden anschliessend 2,5 g 2-Brompropionsäure-phenacylester in 8,0 ml Hexamethylphosphorsäuretriamid eingetropft. Das Reaktionsgemisch wird 2 Stunden unter Rückflussbedingungen erhitzt, dann gekühlt, auf Eis gegossen und erschöpfend mit Aether extrahiert. Der Aetherextrakt wird mit Wasser gewaschen, über Natriumsulfat getrocknet und unter vermindertem Druck eingedampft. Der zurückbleibende 2-[p-(p-Chlorphenoxy)phenoxy]propionsäure-phenacylester kann durch Adsorption an Kieselgel gereinigt werden; Fp: 74°C.

Das Ausgangsmaterial 2-Brompropionsäure-phenacylester erhält man beim Einsatz von:

2-Brompropionsäurebromid und α-Hydroxyacetophenon in Pyridin. Kp. 130-134°C/3,0 Torr.

## Beispiel 4

Zur Herstellung eines emulgierbaren Konzentrates werden die nachstehend aufgeführten Bestandteile dieses Konzentrates miteinander vermischt:

p-tert.-Butyl-α-methylphenacyl D-2-[p-(α,α,α-trifluor-p-tolyloxy)phenoxy]propionat (Wirkstoff; Verbindung der Formel I) 500 g/L

Emulgator bestehend aus 60 Gewichtsteilen eines Kondensationsproduktes aus Ricinusöl und Aethylenoxid (1:25 Mol.-Verhältnis), 20 Gewichtsteilen Calzium p-dodecylbenzolsulfonat und 20 Gewichtsteilen eines Lösungsmittelgemisches bestehend aus n-Butanol und $C_{10}$-Alkylbenzolen 125 g/L

Lösungsmittel bestehend aus $C_{10}$-Alkylbenzolen auf 1 Liter

In einem Kolben mit Rührwerk werden bei Raumtemperatur ein Teil des Lösungsmittels vorgelegt und Wirkstoff und Emulgator zugegeben. Sobald Lösung eingetreten ist, wird mit mehr Lösungsmittel auf 1 Liter aufgefüllt. Das fertige emulgierbare Konzentrat ist eine klare, farblose bis mittelbraune, haltbare Lösung, die im Wasser spontan emulgiert. Die Emulsion stellt eine stabile, gebrauchsfertige Spritzbrühe dar.

In analoger Weise erhält man bei Einsatz von anderen Wirkstoffen der Formel I weitere emulgierbare Konzentrate und Spritzbrühen.

Beispiel 5

Der Wirkstoff der Formel I, beispielsweise p-tert.-Butyl-α-methylphenacyl D-2-[p-(α,α,α-trifluor-p-tolyloxy)-phenoxy]propionat (Verbindung A in der nachstehenden Tabelle) wird so in Aceton gelöst, dass eine 2% Lösung an Wirkstoff entsteht. Kurz vor Versuchsbeginn wird mit Wasser, das 0,4 Gewichtsprozent eines Netzmittels, beispielsweise Nonoxynol, enthält, auf die gewünschte Konzentration verdünnt. Diese Konzentration beträgt bei einem Sprühvolumen von 1000 l/ha 0,3-2,5 kg Wirkstoff/ha.

Die Testpflanzen (Ungräser und Nutzpflanzen), deren Wachstumsstadium gleich und geeignet für Versuchszwecke ist, werden im Gewächshaus mit dem formulierten Wirkstoff besprüht. Mittels Quecksilberdampflampen wird ein 16 Stunden Tag simuliert. 3 Wochen nach dem Besprühen werden die Pflanzen auf die eingetretene Wirkung untersucht, d.h. es werden die % Nekrose bestimmt, wobei 100% Nekrose einer vollständigen Zerstörung der Pflanze entspricht. Anhand der Ergebnisse wird in jedem Fall die Konzentration bestimmt, bei der das Unkraut ≥80% Nekrose und die Nutzpflanze ≤20% Nekrose gegenüber der Kontrolle zeigen. Diese Konzentrationen (kg Wirkstoff/ha) sind in der nachstehenden Tabelle zusammengefasst.

Tabelle

| Wirkstoff | Ungräser | | | | Nutzpflanze | | |
|---|---|---|---|---|---|---|---|
| | Sor. | Ech. | Set. | Dig. | Soja | Reis | Weizen |
| Verbindung A | <0,3 | <0,3 | <0,3 | <0,3 | >2,5 | 0,5 | 1,0 |
| Verbindung B | <0,3 | 0,3 | 0,3 | 0,3 | >1,5 | >1,5 | 1,0 |
| Verbindung C | <0,3 | <0,3 | <0,3 | <0,3 | >1,5 | 0,5 | <0,3 |
| Verbindung D | 1,2 | <0,3 | 0,3 | 1,2 | >1,2 | 0,6 | >1,2 |
| Verbindung E | 1,2 | <0,3 | <0,3 | <0,3 | >1,2 | 0,3 | >1,2 |
| Verbindung F | 0,6 | 0,3 | >1,2 | 1,2 | >1,2 | >1,2 | >1,2 |
| Verbindung G | >1,2 | <0,3 | 0,6 | >1,2 | >1,2 | 1,2 | >1,2 |
| Verbindung H | <0,3 | <0,3 | 0,6 | 0,6 | >1,2 | 0,6 | 0,3 |
| Verbindung I | >1,2 | <0,3 | 0,6 | >1,2 | >1,2 | 0,3 | >1,2 |
| Verbindung J | >1,2 | <0,3 | 0,6 | >1,2 | >1,2 | <0,3 | >1,2 |
| Verbindung K | <0,3 | <0,3 | <0,3 | <0,3 | >1,2 | <0,3 | <0,3 |
| Verbindung L | <0,3 | <0,3 | <0,3 | <0,3 | >1,2 | <0,3 | <0,3 |
| Verbindung M | 0,3 | <0,3 | <0,3 | <0,3 | >1,2 | 0,3 | 0,3 |
| Verbindung N | <0,3 | <0,3 | <0,3 | <0,3 | >1,2 | <0,3 | <0,3 |
| Verbindung O | <0,3 | <0,3 | <0,3 | <0,3 | >1,2 | <0,3 | <0,3 |
| Verbindung P | <0,3 | <0,3 | <0,3 | <0,3 | >1,2 | <0,3 | <0,3 |
| Verbindung Q | - | <0,3 | 0,6 | 0,3 | >1,2 | >1,2 | 0,3 |

In der vorstehenden Tabelle werden die folgenden Abkürzungen benützt:

Verbindung A = p-tert.-Butyl-α-methylphenacyl D-2-[p-(α,α,α-trifluor-p-tolyloxy)phenoxy]-propionat

Verbindung B = p-Nitrophenacyl D-2-[p-(α,α,α-trifluor-p-tolyloxy)phenoxy]propionat

Verbindung C = m-Nitrophenacyl D-2-[p-(α,α,α-trifluor-p-tolyloxy)phenoxy]propionat

Verbindung D = α-Methylphenacyl 2-[p-(2,4-dichlorphenoxy)phenoxy]propionat

Verbindung E = m-Nitrophenacyl D-2-[p-(p-bromphenoxy)-phenoxy]propionat

Verbindung F = 2-Naphthoylmethyl D-2-[p-(α,α,α-trifluor-p-tolyloxy)phenoxy]propionat

Verbindung G = m-Nitrophenacyl D-2-[p-(2,4-dichlorphenoxy)phenoxy]propionat

Verbindung H = p-Cyanphenacyl D-2-[p-(α,α,α-trifluor-p-tolyloxy)phenoxy]propionat

Verbindung I = o-Chlorphenacyl 2-[p-(2,4-dichlorphenoxy)-phenoxy]propionat

Verbindung J = o-Chlorphenacyl D-2-[p-(p-chlorphenoxy)-phenoxy]propionat

Verbindung K = p-Methoxyphenacyl D-2-[p-(α,α,α-trifluor-p-tolyloxy)phenoxy]propionat

Verbindung L = m-Methoxyphenacyl D-2-[p-(α,α,α-trifluor-p-tolyloxy)phenoxy]propionat

Verbindung M = o-Methoxyphenacyl D-2-[p-(α,α,α-trifluor-p-tolyloxy)phenoxy]propionat

Verbindung N = p-Methylphenacyl D-2-[p-(α,α,α-trifluor-p-tolyloxy)phenoxy]propionat

Verbindung O = o-Chlorphenacyl D-2-[p-(α,α,α-trifluor-p-tolyloxy)phenoxy]propionat

Verbindung P = p-Chlorphenacyl D-2-[p-(α,α,α-trifluor-p-tolyloxy)phenoxy]propionat

Verbindung Q = o-Nitrophenacyl D-2-[p-(α,α,α-trifluor-p-tolyloxy)phenoxy]propionat

Sor. = Sorghum halepense

Ech. = Echinochloa crus-galli

Set. = Setaria faberii

Dig. = Digitaria floridiana

## Patentansprüche

1. Verbindungen der allgemeinen Formel

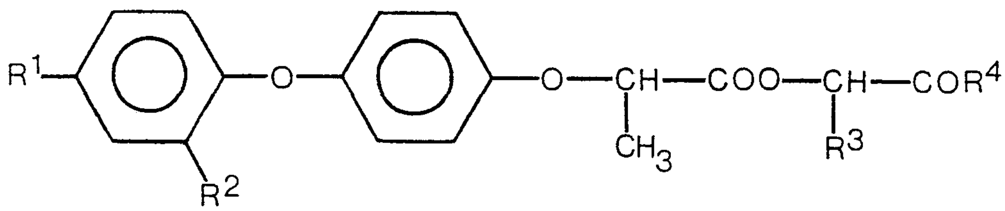

I

worin $R^1$ Halogen oder Trifluormethyl,
$R^2$ Wasserstoff oder Halogen,
$R^3$ Wasserstoff oder $C_{1-6}$-Alkyl
und $R^4$ Aryl, gegebenenfalls mono-, di- oder tri-substituiert mit Halogen, $C_{1-4}$-Alkyl, $C_{1-4}$-Alkoxy, Hydroxy, Nitro oder Cyan; oder Aryl-$C_{1-3}$-Alkyl, gegebenenfalls im Arylkern mono-, di- oder tri-substituiert mit Halogen, $C_{1-4}$-Alkyl, $C_{1-4}$-Alkoxy, Hydroxy, Nitro oder Cyan, wobei die Substituenten im di- und tri-substituierten Aryl- und Arylalkylrest gleich oder verschieden sein können, bedeuten.

2. Verbindungen nach Anspruch 1, worin $R^1$ Trifluormethyl und $R^2$ Wasserstoff bedeuten.

3. Verbindungen nach Anspruch 1, worin $R^1$ und $R^2$ Halogen bedeuten.

4. Verbindungen nach Anspruch 3, worin $R^1$ und $R^2$ Chlor bedeuten.

5. Verbindungen nach einem der Ansprüche 1 bis 4, worin $R^3$ Wasserstoff, Methyl oder Aethyl bedeutet.

6. Verbindungen nach einem der Ansprüche 1 bis 5, worin $R^4$ gegebenenfalls substituiertes Aryl bedeutet.

7. Verbindungen nach Anspruch 6, worin $R^4$ gegebenenfalls substituiertes Phenyl bedeutet.

8. Verbindungen nach Anspruch 6 oder 7, worin die gegebenenfalls vorhandenen Substituenten gleich oder verschieden sein können und Halogen, Alkyl, Alkoxy oder Nitro bedeuten.

9. Verbindungen nach Anspruch 8, worin die Substituenten gleich oder verschieden sein können und Chlor, Methoxy oder Nitro bedeuten.

10. Optisch aktive Verbindungen der D-Reihe entsprechend den in den Ansprüchen 1 bis 9 genannten Verbindungen.

11. Eine Verbindung nach Anspruch 1, ausgewählt unter:

o-Nitrophenacyl D-2-[p-(α,α,α-trifluor-p-tolyloxy)-phenoxy]propionat,

o-Methoxyphenacyl D-2-[p-(α,α,α-trifluor-p-tolyloxy)-phenoxy]propionat,

m-Nitrophenacyl D-2-[p-(α,α,α-trifluor-p-tolyloxy)-phenoxy]propionat,

p-Nitrophenacyl D-2-[p-(α,α,α-trifluor-p-tolyloxy)-phenoxy]propionat und

p-Chlorphenacyl D-2-[p-(α,α,α-trifluor-p-tolyloxy)-phenoxy]propionat.

12. Eine Verbindung nach Anspruch 1, ausgewählt unter:

Phenacyl 2-[p-(p-chlorphenoxy)phenoxy]propionat,

p-Bromphenacyl 2-[p-(p-chlorphenoxy)phenoxy]propionat,

α-Methylphenacyl 2-[p-(p-chlorphenoxy)phenoxy]propionat,

α-Methylphenacyl 2-[p-(2,4-dichlorphenoxy)phenoxy]-propionat,

o-Chlorphenacyl 2-[p-(2,4-dichlorphenoxy)phenoxy]-propionat,

o-Methylphenacyl D-2-[p-(α,α,α-trifluor-p-tolyloxy)-phenoxy]propionat,

o-Chlorphenacyl D-2-[p-(α,α,α-trifluor-p-tolyloxy)-phenoxy]propionat,

2,4-Dichlorphenacyl D-2-[p-(α,α,α-trifluor-p-tolyloxy)phenoxy]propionat,

Phenacyl D-2-[p-(α,α,α-trifluor-p-tolyloxy)phenoxy]-propionat,

p-tert.-Butylphenacyl D-2-[p-(α,α,α-trifluor-p-tolyloxy)phenoxy]propionat,

p-tert.-Butyl-α-methylphenacyl D-2-[p-(α,α,α-trifluor-p-tolyloxy)phenoxy]propionat,

p-Methoxyphenacyl D-2-[p-(α,α,α-trifluor-p-tolyloxy)-phenoxy]propionat,

m-Methoxyphenacyl D-2-[p-(α,α,α-trifluor-p-tolyloxy)-phenoxy]propionat,

p-Methylphenacyl D-2-[p-(α,α,α-trifluor-p-tolyloxy)-phenoxy]propionat,

α-Methylphenacyl D-2-[p-(α,α,α-trifluor-p-tolyloxy)-phenoxy]propionat,

α-Aethylphenacyl D-2-[p-(α,α,α-trifluor-p-tolyloxy)-phenoxy]propionat,

α-Methyl-p-methoxyphenacyl D-2-[p-(α,α,α-trifluor-p-tolyloxy)phenoxy]propionat und

α-Methyl-2-hydroxy-5-bromphenacyl D-2-[p-(α,α,α-trifluor-p-tolyloxy)phenoxy]propionat.

13. Eine Verbindung nach Anspruch 1, ausgewählt unter:

m-Nitrophenacyl D-2-[p-(p-bromphenoxy)phenoxy]propionat,

2-Naphthoylmethyl D-2-[p-(α,α,α-trifluor-p-tolyloxy)-phenoxy]propionat,

m-Nitrophenacyl D-2-[p-(2,4-dichlorphenoxy)phenoxy]-propionat,

α-Methylphenacyl D-2-[p-(p-chlorphenoxy)phenoxy]-propionat,

o-Chlorphenacyl D-2-[p-(p-chlorphenoxy)phenoxy]propionat und

p-Cyanphenacyl D-2-[p-(α,α,α-trifluor-p-tolyloxy)-phenoxy]propionat.

14. Verbindungen nach einem der Ansprüche 1 bis 13 als herbicide Mittel.

15. Herbicides Mittel, dadurch gekennzeichnet, dass es eine wirksame Menge mindestens einer Verbindung der allgemeinen Formel

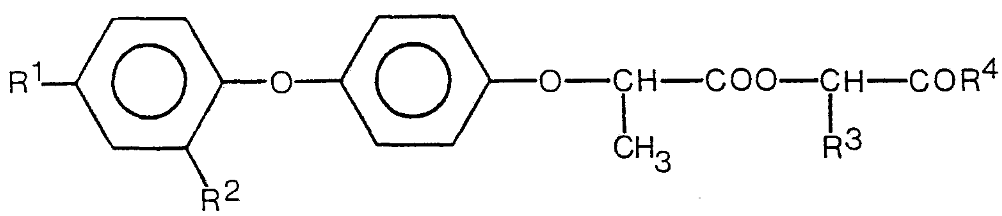

I

worin $R^1$ Halogen oder Trifluormethyl,
$R^2$ Wasserstoff oder Halogen,
$R^3$ Wasserstoff oder $C_{1-6}$-Alkyl
und $R^4$ Aryl, gegebenenfalls mono-, di- oder tri-substituiert mit Halogen, $C_{1-4}$-Alkyl, $C_{1-4}$-Alkoxy, Hydroxy, Nitro oder Cyan; oder Aryl-$C_{1-3}$-Alkyl, gegebenenfalls im Arylkern mono-, di- oder tri-substituiert mit Halogen, $C_{1-4}$-Alkyl, $C_{1-4}$-Alkoxy, Hydroxy, Nitro oder Cyan, wobei die Substituenten im di- und tri-substituierten Aryl- und Arylalkylrest gleich oder verschieden sein können, bedeuten,

sowie inertes Trägermaterial enthält.

16. Herbicides Mittel nach Anspruch 15, dadurch gekennzeichnet, dass es eine wirksame Menge von p-Chlorphenacyl D-2-[p-(α,α,α-trifluor-p-tolyloxy)phenoxy]propionat sowie inertes Trägermaterial enthält.

17. Herbicides Mittel nach Anspruch 15, dadurch gekennzeichnet, dass es eine wirksame Menge von o-Nitrophenacyl D-2-[p-(α,α,α-trifluor-p-tolyloxy)phenoxy]propionat sowie inertes Trägermaterial enthält.

18. Herbicides Mittel nach Anspruch 15, dadurch gekennzeichnet, dass es eine wirksame Menge von m-Nitrophenacyl D-2-[p-(α,α,α-trifluor-p-tolyloxy)phenoxy]propionat sowie inertes Trägermaterial enthält.

19. Herbicides Mittel nach Anspruch 15, dadurch gekennzeichnet, dass es eine wirksame Menge von p-Nitrophenacyl D-2-[p-(α,α,α-trifluor-p-tolyloxy)phenoxy]propionat sowie inertes Trägermaterial enthält.

20. Herbicides Mittel nach Anspruch 15, dadurch gekennzeichnet, dass es eine wirksame Menge von o-Methoxyphenacyl D-2-[p-(α,α,α-trifluor-p-tolyloxy)phenoxy]propionat sowie inertes Trägermaterial enthält.

21. Verfahren zur Herstellung von Verbindungen der allgemeinen Formel

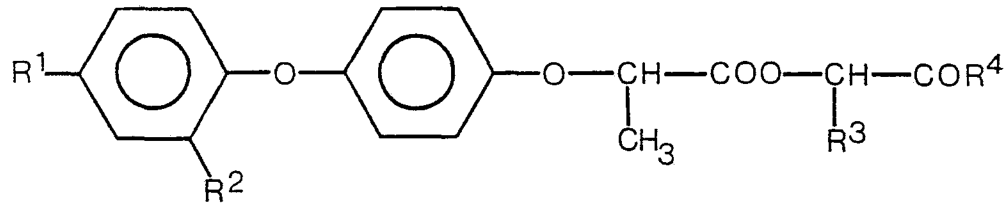

I

worin $R^1$ Halogen oder Trifluormethyl,
$R^2$ Wasserstoff oder Halogen,
$R^3$ Wasserstoff oder $C_{1-6}$-Alkyl
und $R^4$ Aryl, gegebenenfalls mono-, di oder tri-substituiert mit Halogen, $C_{1-4}$-Alkyl, $C_{1-4}$-Alkoxy, Hydroxy, Nitro oder Cyan; oder Aryl-$C_{1-3}$-Alkyl, gegebenenfalls im Arylkern mono-, di- oder tri-substituiert mit Halogen, $C_{1-4}$-Alkyl, $C_{1-4}$-Alkoxy, Hydroxy, Nitro oder Cyan, wobei die Substituenten im di- und tri-substituierten Aryl- und Arylalkylrest gleich oder verschieden sein können, bedeuten,

dadurch gekennzeichnet, dass man

a) eine Säure oder ein reaktionsfähiges Derivat dieser Säure der Formel

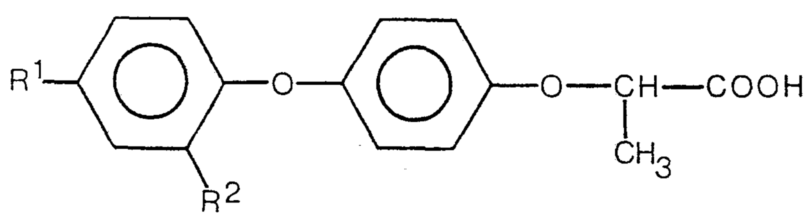

II

worin $R^1$ und $R^2$ die oben angegebenen Bedeutungen besitzen,

mit einem Alkohol oder einem reaktionsfähigen Derivat dieses Alkohols der Formel

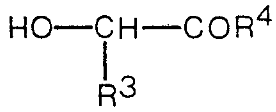 III

worin $R^3$ und $R^4$ die oben angegebenen Bedeutungen besitzen,

umsetzt, oder

b) eine Verbindung der Formel

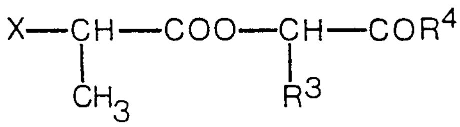 IV

worin $R^3$ und $R^4$ die oben angegebenen Bedeutungen besitzen und X Chlor, Brom, Jod, Mesyloxy oder Tosyloxy bedeutet,

mit einer Verbindung der Formel

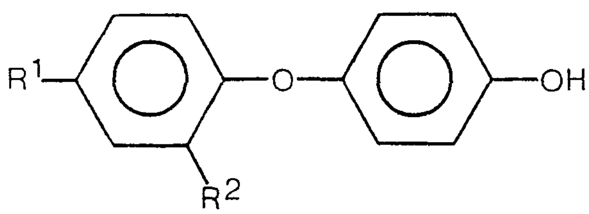 V

worin $R^1$ und $R^2$ die oben angegebenen Bedeutungen besitzen, oder einem Alkalimetallsalz davon,

umsetzt, oder

c) eine Verbindung der Formel

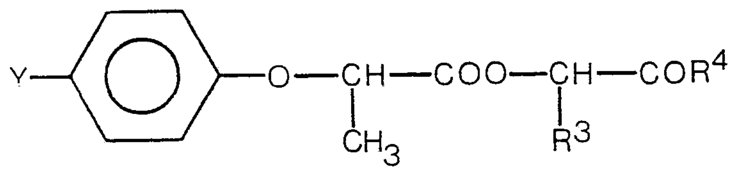

VI

mit einer Verbindung der Formel

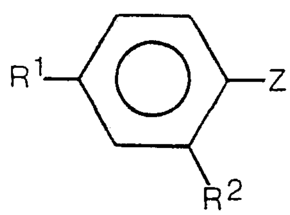

VII

worin $R^1$, $R^2$, $R^3$ und $R^4$ die oben angegebenen Bedeutungen besitzen, und eines von Y und Z Halogen bedeutet, während das andere Hydroxy bedeutet,

umsetzt.

22. Verfahren zur Bekämpfung von Unkräutern, dadurch gekennzeichnet, dass man die gegen Unkräuter zu schützenden Gegenstände und/oder die Unkräuter mit einer wirksamen Menge einer der in den Ansprüchen 1 bis 13 genannten Verbindungen oder eines der in den Ansprüchen 15 bis 20 genannten Mittel behandelt.

23. Verwendung einer der in den Ansprüchen 1 bis 13 genannten Verbindungen bzw. eines der in den Ansprüchen 15 bis 20 genannten Mittel zur Bekämpfung von Unkräutern.

***

## Patentansprüche "für Oesterreich"

1. Herbicides Mittel, dadurch gekennzeichnet, dass es eine wirksame Menge mindestens einer Verbindung der allgemeinen Formel

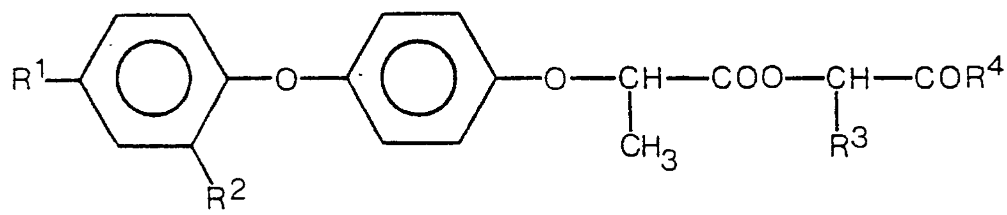

I

worin $R^1$ Halogen oder Trifluormethyl,
$R^2$ Wasserstoff oder Halogen,
$R^3$ Wasserstoff oder $C_{1-6}$-Alkyl
und $R^4$ Aryl, gegebenenfalls mono-, di- oder tri-substituiert mit Halogen, $C_{1-4}$-Alkyl, $C_{1-4}$-Alkoxy, Hydroxy, Nitro oder Cyan; oder Aryl-$C_{1-3}$-Alkyl, gegebenenfalls im Arylkern mono-, di- oder tri-substituiert mit Halogen, $C_{1-4}$-Alkyl, $C_{1-4}$-Alkoxy, Hydroxy, Nitro oder Cyan, wobei die Substituenten im di- und tri-substituierten Aryl- und Arylalkylrest gleich oder verschieden sein können, bedeuten,
sowie inertes Trägermaterial enthält.

2. Herbicides Mittel nach Anspruch 1, worin $R^1$ Trifluormethyl und $R^2$ Wasserstoff bedeuten.

3. Herbicides Mittel nach Anspruch 1, worin $R^1$ und $R^2$ Chlor bedeuten.

4. Herbicides Mittel nach einem der Ansprüche 1 bis 3, worin $R^3$ Wasserstoff, Methyl oder Aethyl bedeutet.

5. Herbicides Mittel nach einem der Ansprüche 1 bis 4, worin $R^4$ gegebenenfalls substituiertes Phenyl bedeutet.

6. Herbicides Mittel nach Anspruch 5, worin die gegebenenfalls vorhandenen Substituenten gleich oder verschieden sein können und Halogen, Alkyl, Alkoxy oder Nitro bedeuten.

7. Herbicides Mittel nach einem der Ansprüche 1 bis 6, worin die Verbindung bzw. Verbindungen der Formel I optisch aktiv der D-Reihe ist bzw. sind.

8. Herbicides Mittel nach Anspruch 1, dadurch gekennzeichnet, dass es eine wirksame Menge einer Verbindung ausgewählt unter:

o-Nitrophenacyl D-2-[p-(α,α,α-trifluor-p-tolyloxy)-phenoxy]propionat,

o-Methoxyphenacyl D-2-[p-(α,α,α-trifluor-p-tolyloxy)-phenoxy]propionat,

m-Nitrophenacyl D-2-[p-(α,α,α-trifluor-p-tolyloxy)-phenoxy]propionat,

p-Nitrophenacyl D-2-[p-(α,α,α-trifluor-p-tolyloxy)-phenoxy]propionat und

p-Chlorphenacyl D-2-[p-(α,α,α-trifluor-p-tolyloxy)-phenoxy]propionat

sowie inertes Trägermaterial enthält.

9. Herbicides Mittel nach Anspruch 1, dadurch gekennzeichnet, dass es eine wirksame Menge einer Verbindung ausgewählt unter:

Phenacyl 2-[p-(p-chlorphenoxy)phenoxy]propionat,

p-Bromphenacyl 2-[p-(p-chlorphenoxy)phenoxy]propionat,

α-Methylphenacyl 2-[p-(p-chlorphenoxy)phenoxy]propionat,

α-Methylphenacyl 2-[p-(2,4-dichlorphenoxy)phenoxy]-propionat,

o-Chlorphenacyl 2-[p-(2,4-dichlorphenoxy)phenoxy]-propionat,

o-Methylphenacyl D-2-[p-(α,α,α-trifluor-p-tolyloxy)-phenoxy]propionat,

o-Chlorphenacyl D-2-[p-(α,α,α-trifluor-p-tolyloxy)-phenoxy]propionat,

2,4-Dichlorphenacyl D-2-[p-(α,α,α-trifluor-p-tolyloxy)phenoxy]propionat,

Phenacyl D-2-[p-(α,α,α-trifluor-p-tolyloxy)phenoxy]-propionat,

p-tert.-Butylphenacyl D-2-[p-(α,α,α-trifluor-p-tolyloxy)phenoxy]propionat,

p-tert.-Butyl-α-methylphenacyl D-2-[p-(α,α,α-trifluor-p-tolyloxy)phenoxy]propionat,

p-Methoxyphenacyl D-2-[p-(α,α,α-trifluor-p-tolyloxy)-phenoxy]propionat,

m-Methoxyphenacyl D-2-[p-(α,α,α-trifluor-p-tolyloxy)-phenoxy]propionat,

p-Methylphenacyl D-2-[p-(α,α,α-trifluor-p-tolyloxy)-phenoxy]propionat,

α-Methylphenacyl D-2-[p-(α,α,α-trifluor-p-tolyloxy)-phenoxy]propionat,

α-Aethylphenacyl D-2-[p-(α,α,α-trifluor-p-tolyloxy)-phenoxy]propionat,

α-Methyl-p-methoxyphenacyl D-2-[p-(α,α,α-trifluor-p-tolyloxy)phenoxy]propionat und

α-Methyl-2-hydroxy-5-bromphenacyl D-2-[p-(α,α,α-trifluor-p-tolyloxy)phenoxy]propionat
sowie inertes Trägermaterial enthält.

10. Herbicides Mittel nach Anspruch 1, dadurch gekennzeichnet, dass es eine wirksame Menge einer Verbindung ausgewählt unter:

m-Nitrophenacyl D-2-[p-(p-bromphenoxy)phenoxy]propionat,

2-Naphthoylmethyl D-2-[p-(α,α,α-trifluor-p-tolyloxy)-phenoxy]propionat,

m-Nitrophenacyl D-2-[p-(2,4-dichlorphenoxy)phenoxy]-propionat,

α-Methylphenacyl D-2-[p-(p-chlorphenoxy)phenoxy]-propionat,

o-Chlorphenacyl D-2-[p-(p-chlorphenoxy)phenoxy]propionat und

p-Cyanphenacyl D-2-[p-(α,α,α-trifluor-p-tolyloxy)-phenoxy]propionat

sowie inertes Trägermaterial enthält.

11. Verfahren zur Herstellung von Verbindungen der allgemeinen Formel

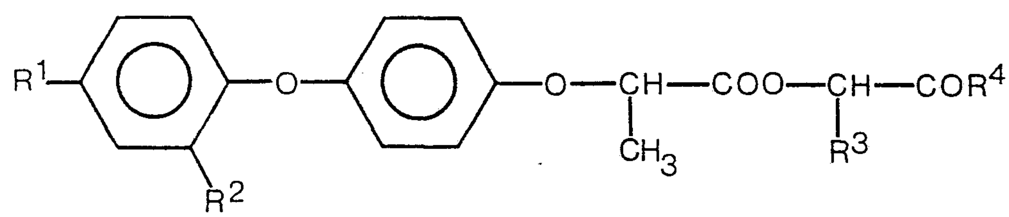

I

worin $R^1$ Halogen oder Trifluormethyl,

$R^2$ Wasserstoff oder Halogen,

$R^3$ Wasserstoff oder $C_{1-6}$-Alkyl

und $R^4$ Aryl, gegebenenfalls mono-, di- oder tri-substituiert mit Halogen, $C_{1-4}$-Alkyl, $C_{1-4}$-Alkoxy, Hydroxy, Nitro oder Cyan; oder Aryl-$C_{1-3}$-Alkyl, gegebenenfalls im Arylkern mono-, di- oder tri-substituiert mit Halogen, $C_{1-4}$-Alkyl, $C_{1-4}$-Alkoxy, Hydroxy, Nitro oder Cyan, wobei die Substituenten im di- und tri-substituierten Aryl- und Arylalkylrest gleich oder verschieden sein können, bedeuten,

dadurch gekennzeichnet, dass man

a) eine Säure oder ein reaktionsfähiges Derivat dieser

Säure der Formel

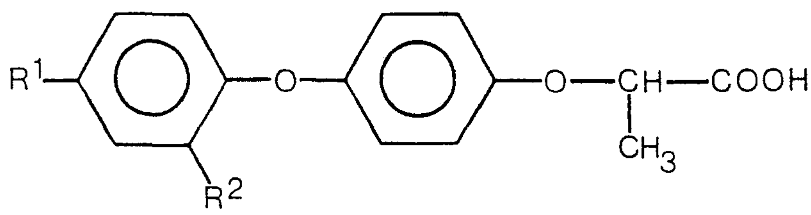 II

worin $R^1$ und $R^2$ die oben angegebenen Bedeutungen besitzen,

mit einem Alkohol oder einem reaktionsfähigen Derivat dieses Alkohols der Formel

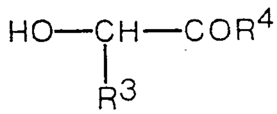 III

worin $R^3$ und $R^4$ die oben angegebenen Bedeutungen besitzen,

umsetzt, oder

b) eine Verbindung der Formel

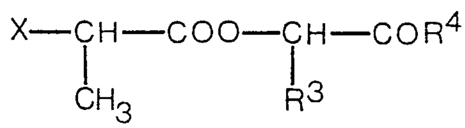 IV

worin $R^3$ und $R^4$ die oben angegebenen Bedeutungen besitzen und X Chlor, Brom, Jod, Mesyloxy oder Tosyloxy bedeutet,

mit einer Verbindung der Formel

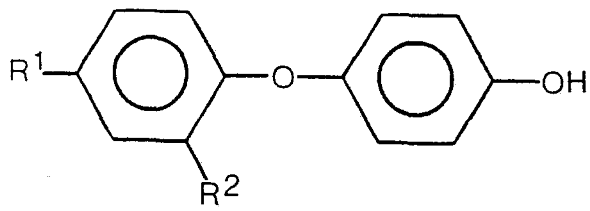

V

worin $R^1$ und $R^2$ die oben angegebenen Bedeutungen besitzen, oder einem Alkalimetallsalz davon,
umsetzt, oder

c) eine Verbindung der Formel

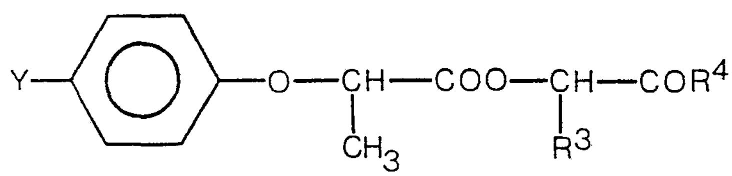

VI

mit einer Verbindung der Formel

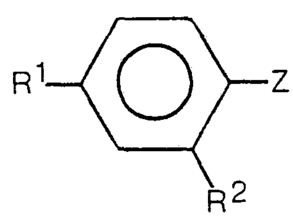

VII

worin $R^1$, $R^2$, $R^3$ und $R^4$ die oben angegebenen Bedeutungen besitzen, und eines von Y und Z Halogen bedeutet, während das andere Hydroxy bedeutet,
umsetzt.

12. Verfahren zur Herstellung eines herbiciden Mittels, dadurch gekennzeichnet, dass man mindestens eine der in den Ansprüchen 1 bis 9

genannten Verbindungen mit einem inerten Trägermaterial vermischt.

13. Verfahren zur Herstellung eines herbiciden Mittels, dadurch gekennzeichnet, dass man mindestens eine der im Anspruch 10 genannten Verbindungen mit einem inerten Trägermaterial vermischt.

14. Verfahren zur Bekämpfung von Unkräutern, dadurch gekennzeichnet, dass man die gegen Unkräuter zu schützenden Gegenstände und/oder die Unkräuter mit einer wirksamen Menge eines der in den Ansprüchen 1 bis 9 genannten Mittel behandelt.

15. Verfahren zur Bekämpfung von Unkräutern, dadurch gekennzeichnet, dass man die gegen Unkräuter zu schützenden Gegenstände und/oder die Unkräuter mit einer wirksamen Menge des im Anspruch 10 genannten Mittels behandelt.

16. Verwendung eines der in den Ansprüchen 1 bis 9 genannten Mittel zur Bekämpfung von Unkräutern.

17. Verwendung des im Anspruch 10 genannten Mittels zur Bekämpfung von Unkräutern.

***

0019796

Europäisches Patentamt

# EUROPÄISCHER RECHERCHENBERICHT

Nummer der Anmeldung
EP 80 10 2660

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | DE - A - 2 639 796 (ROHM & HAAS)<br>* Seiten 1-2, Patentanspruch 1; Seite 39, Beispiel C; Seiten 9-10, Patentansprüche 33-36 * | 1,14, 15,21 | C 07 C 69/712<br>67/303<br>67/10<br>A 01 N 39/02<br>C 07 C 121/76<br>79/35 |
| | | | RECHERCHIERTE SACHGEBIETE (Int. Cl. 3)<br>C 07 C 69/712 |
| | | | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |
| X | Der vorliegende Recherchenbericht wurde für alle Patentansprüche erstellt. | | |

| Recherchenort | Abschlußdatum der Recherche | Prüfer |
|---|---|---|
| Den Haag | 27-08-1980 | KINZINGER |